# EUROPÄISCHE PATENTSCHRIFT

(11) **EP 1 154 970 B1**
(45) Veröffentlichungstag und Bekanntmachung des Hinweises auf die Patenterteilung: **03.11.2004**
(21) Anmeldenummer: 00904913.1
(22) Anmeldetag: 14.01.2000
(51) Int. Cl.: C04B 35/80, C04B 35/573, B32B 18/00, F16D 69/02, F16D 65/12

(54) **FASERVERSTÄRKTER KERAMIKKÖRPER UND VERFAHREN ZUR HERSTELLUNG EINES SOLCHEN**
FIBRE-REINFORCED CERAMIC BODY AND METHOD FOR PRODUCING SAME
CORPS CERAMIQUE RENFORCE PAR DES FIBRES ET SON PROCEDE DE PRODUCTION

(30) Priorität: 14.01.1999 DE 19901215
(43) Veröffentlichungstag der Anmeldung: 21.11.2001
(73) Patentinhaber: Menzolit-Fibron GmbH, 75015 Bretten (DE)
(72) Erfinder: BERRETH, Karl, D-73630 Remshalden (DE); SPEICHER, Marcus, D-66292 Riegelsberg (DE); GADOW, Rainer, D-84544 Aschau am Inn (DE)
(74) Vertreter: Scherzberg, Andreas, Dr.
(86) Internationale Anmeldenummer: PCT/EP2000/000253
(87) Internationale Veröffentlichungsnummer: WO 2000/041982

(56) Entgegenhaltungen:
- EP-A- 0 459 916
- DE-A- 4 438 456
- DATABASE WPI Week 198841 Derwent Publications Ltd., London, GB; AN 1988-288680 XP002135873 & JP 63 210065 A (TORAY IND. INC.), 31. August 1988 (1988-08-31)
- DATABASE WPI Week 199324 Derwent Publications Ltd., London, GB; AN 1993-197019 XP002135874 & WO 93 11185 A (GRAPHITE-BASED CONSTR. MATERIALS RES. INST.), 10. Juni 1993 (1993-06-10)

## Beschreibung

Die Erfindung betrifft einen faserverstärkten Keramikkörper und ein Verfahren zur Herstellung eines solchen, insbesondere eine Bremsscheibe aus faserverstärkter Keramik und ein Verfahren zur Herstellung einer solchen.

Faservestärkte Keramikkörper und Verfahren zur Herstellung hierfür sind bekannt. So ist beispielsweise aus der DE-A-44 45 226 eine Bremsscheibe bekannt, die aus einem kohlenstoffaserverstärkten Werkstoff als innenbelüftete Bremsscheibe mit radialen Lüftungskanälen aus zwei Hälften hergestellt ist.

Die beiden Außenseiten der Bremsscheibe sind als Reibflächen ausgebildet. An der Innenseite mindestens einer Hälfte sind Rippen ausgebildet, die unter Ausbildung von dazwischen frei bleibenden Lüftungskanälen auf der anderen Hälfte anliegen. Beide Hälften sind durch ein geeignetes Verbindungsverfahren, wie bspw. eine Hochtemperaturlötung oder ein Klebeverfahren, miteinander unlösbar verbunden. Zur Befestigung am Rad dient ein topfförmiger Flansch, der entweder einteilig mit einer Hälfte ausgebildet ist oder über Schrauben oder sonstige Verbindungselemente mit der Bremsscheibe verbunden ist.

Derartige Bremsscheiben können bspw. aus einem kohlenstoffaserverstärkten Kohlenstoff (CFC) bestehen und werden seit einigen Jahren mit speziell entwickelten Reibbelägen im automobilen Rennsport eingesetzt. Der Einsatzbereich von CFC-Werkstoffen ist allerdings wegen der Oxidationsanfälligkeit der Kohlenstoffasern auf etwa 500 °C begrenzt. Darüber hinaus sind weitere Verbundkeramikwerkstoffe bekannt geworden, aus denen derartige Bremsscheiben oder andere Keramikkörper hergestellt werden können (vgl. DE-A-197 11 831). Dabei werden lang- oder kurzfaserverstärkte CFC-Materialien als Vorkörper verwendet, die dann mit flüssigem Silizium schmelzinfiltriert werden. So entstehen reaktionsgebundene kohlenstoffaserverstärkte SiC-Keramiken.

Allgemein werden faserverstärkte Keramikwerkstoffe als Hochleistungswerkstoffe im Maschinen- und Anlagenbau und in der Luftund Raumfahrttechnik eingesetzt. Dabei sind neben einer sehr hohen spezifischen Festigkeit und Steifigkeit eine gute Schadenstoleranz und Thermoschockbeständigkeit und Oxidationsbeständigkeit angestrebt. Letzteres ist bei Verwendung von Langfasern eingeschränkt, da ein oxidativer Angriff in das Bauteil-Innere vordringen kann und somit bei Überschreitung der kritischen Risslänge zur Zerstörung führt.

Mit kurzfaserverstärkten Keramikkörpern mit reaktionsgebundenen Fasern auf Basis von Si/C/B/N gemäß der DE-A-197 11 831 lässt sich zwar eine höhere Oxidationsstabilität auch bei hohen Temperaturen erzielen, da eine Oxidation der durch die keramische Matrix isoliert vorliegenden Kurzfasem das Bauteil nur an der Oberfläche schädigt. Solche Keramikkörper weisen vielfach jedoch keine ausreichende Schadenstoleranz auf, wie sie für bestimmte Hochleistungsanwendungen, z. B. für Bremsscheiben gefordert wird.

JP-A-63 210 065 beschreibt ein Verfahren zur Herstellung eines CIC-Verbundkörpers, wobei die notwendige Verdichtung über zahlreiche Imprägnierund Karbonisierungszyklen erfolgt. Diese Verbundkörper können für Reibeinheiten, z. B. Bremsen verwendet werden. Der faserverstärkte Keramikkörper besteht dabei aus einem Kern, der aus 25 mit Langfasem verstärkten Schichten aufgebaut ist, und einer Randschicht, die mit dem Kern verbunden und mit Kurzfasern verstärkt ist.

Die DE-A-44 38 456 offenbart einen Keramikkörper, der aus mindestens zwei Teilen zusammengesetzt ist, nämlich aus einem Kemkörper und einem Reibkörper. Dabei ist zumindest der Reibkörper aus einem kohlenstofffaserverstärkten, porösen Hohlkörper gebildet, dessen Poren zumindest teilweise mit Silizium oder Siliziumkarbid gefüllt sind, was durch Schmelzinfiltration mit einer Siliziumschmelze erzielt wird.

Hierbei wird von einer getrennten Herstellung von Reibkörper und Kernkörper ausgegangen, wobei diese beiden Körper gemäß einer ersten Variante als kohlenstofffaserverstärkte, poröse Kohlenstoffkörper vorbereitet werden, und anschließend mit Silicium infiltriert werden, wobei diese beiden Körper im Bereich der Verbindungsschicht nach Temperaturbehandlung miteinander verbunden werden.

Eine zweite Alternative besteht darin, die beiden Körper als bereits mit Silicium und Siliciumcarbid gefüllte, keramisierte Ausgangskörper herzustellen und diese beiden Ausgangskörper im Bereich ihrer Verbindungsfläche aufeinander zu legen und den Spalt mit Silicium zu füllen.

Der Erfindung liegt demnach die Aufgabe zugrunde, einen verbesserten faserverstärkten Keramikkörper und ein Verfahren zur Herstellung eines solchen zu schaffen, der sich durch eine hohe Schadenstoleranz, eine hohe Festigkeit und Temperaturbeständigkeit auszeichnet. Dabei soll eine möglichst gas- bzw. flüssigkeitsdichte Oberfläche für eine gute Korrosionsbeständigkeit erreichbar sein.

Diese Aufgabe wird durch einen faserverstärkten Keramikkörper mit einer neuartigen Struktur gelöst, die aus einem Kern und einer Randschicht besteht, die mit dem Kern verbunden ist und zumindest eine vorzugsweise tribologisch beanspruchte Außenfläche aufweist, wobei der Kern aus einer oder mehreren Schichten zusammengesetzt ist, von denen mindestens eine mit Langfasern verstärkt ist, und wobei die Randschicht mit Kurzfasem verstärkt ist.

Hinsichtlich des Verfahrens wird diese Aufgabe durch die Merkmale des Anspruchs 15 gelöst, bei dem ein Kern aus mindestens einer Schicht hergestellt wird, die mit Langfasern verstärkt ist und der Kern mit einer Randschicht verbunden wird, die mit Kurzfasern verstärkt ist und zumindest eine Außenfläche aufweist, die vorzugsweise tribologisch beanspruchbar ist.

Die Aufgabe der Erfindung wird auf diese Weise vollkommen gelöst. Erfindungsgemäß wird nämlich durch den Kern, der mit Langfasern verstärkt ist, eine hohe Schadenstoleranz erreicht, während durch die mit Kurzfasern verstärkte Randschicht eine hohe Temperaturbeständigkeit erreicht werden kann, da die Randschicht durch einen hohen Anteil an keramischer Matrix und die Verwendung von Kurzfasern gas- und flüssigkeitsdicht ausgeführt werden kann, so daß eine gute Korrosionsbeständigkeit auch bei Temperaturen von mehr als 500 °C erreichbar ist.

In weiterer Ausgestaltung der Erfindung weist der Kern mehrere mit Langfasern verstärkte Schichten (UD-Schichten) auf, deren Langfasern jeweils in einer Vorzugsrichtung angeordnet sind, wobei die Vorzugsrichtungen mindestens zweier UD-Schichten zueinander winkelversetzt angeordnet sind.

Dabei können zusätzlich Schichten mit gewebten Langfasern vorgesehen sein, die vorzugsweise zwischen benachbarten UD-Schichten angeordnet sind, um einer Delamination entgegenzuwirken.

Durch die Kombination mehrerer winklig zueinander angeordneter UD-Schichten und ggf. von Schichten aus gewebten Langfasern (Cross-ply-Schichten) lassen sich die Festigkeitseigenschaften des Keramikbauteils in gezielter Weise beeinflussen, um so in den spezifischen, auf das Keramikbauteil wirkenden Beanspruchungsrichtungen eine besonders hohe Festigkeit zu erreichen und gleichzeitig eine gute Schadenstoleranz sicherzustellen.

Dabei werden die Kurzfasern in der Randschicht vorzugsweise statistisch verteilt angeordnet.

Um eine solche homogene Verteilung der Kurzfasern zu erreichen, kann bspw. ein Granulationsverfahren verwendet werden.

Unter Langfasern wurden im Sinne dieser Anmeldung Fasern einer Länge von mindestens 50 mm verstanden, während unter Kurzfasern Fasern mit einer Länge von weniger als 50 mm verstanden werden.

Derartige Fasern werden in der Regel in Form von Faserstoffbündeln (sogenannten Rovings) verwendet, die in der Regel aus ca. 3.000 bis 25.000 Einzelfilamenten bestehen. Kommerziell erhältlich sind vielfach 12 k-Rovings, die aus etwa 12.000 Einzelfilamenten bestehen.

Als Fasern zur Verstärkung des Keramikbauteils eignen sich sämtliche Fasern, die eine ausreichend hohe Festigkeit auch bei hohen Temperaturen besitzen, sofern ein Luftabschluß gewährleistet ist. Dies sind in der Regel Fasern mit einer kovalenten Bindung auf der Basis von Silizium, Kohlenstoff, Bor und/oder Stickstoff. Vorzugsweise können als Fasern SiC-Fasern, C-Fasern oder SiBCN-Fasern verwendet werden.

In vorteilhafter Weiterbildung der Erfindung sind die Fasern mit einer Matrix reaktionsgebunden, die insbesondere aus Siliziumcarbid bestehen kann. Die Verwendung eines derartigen Matrixmaterials ermöglicht eine vorteilhafte Herstellung und gleichzeitig eine gute Gasdichtheit in der Randschicht, während Probleme, die durch Schrumpfung bei der Herstellung entstehen können, weitgehend vermeidbar sind.

Ein derartiger Keramikkörper kann als Bremsscheibe für eine innenbelüftete Scheibenbremse ausgebildet sein und zwei miteinander verbundene Hälften aufweisen, wobei jede Hälfte eine als Reibfläche ausgebildete Außenseite und eine Innenseite aufweist, wobei an der Innenseite zumindest eine Hälfte Rippen besitzt, die an der anderen Hälfte anlegen, wobei an den Innenseiten beider Hälften im wesentlichen radial verlaufende Rippen vorgesehen sind, die zwischen entsprechende Rippen der jeweils anderen Hälfte formschlüssig eingreifen.

Bei einer solchen Ausbildung der Bremsscheibe aus zwei Hälften läßt sich durch die form- und stoffschlüssige Verbindung der ineinander eingreifenden Rippen die Befestigung am Rad erheblich vereinfachen, da eine Relativdrehung der beiden Hälften zueinander durch die form- und stoffschlüssige Verbindung wirkungsvoll verhindert wird. Somit kann die Befestigung der Bremsscheibe am Rad auf besonders einfache Weise erfolgen, wobei ggf. auch eine lediglich reibschlüssige Verbindung verwendet werden kann, um das Einleiten von Kerbspannungen in die Bremsscheibe vollständig zu verhindern. Insgesamt wird ferner die Stabilität der solchermaßen aus zwei Hälften bestehenden Bremsscheibe gegenüber bekannten Bremsscheiben erheblich verbessert.

In bevorzugter Weiterbildung der Erfindung sind zwischen den Rippen der einen Hälfte und den Rippen der anderen Hälfte Lüftungskanäle gebildet.

Solche Lüftungskanäle, die insbesondere bei der Herstellung der Bremsscheibe aus Verbundkeramik infolge der schlechteren Wärmeleitfähigkeit der Keramik vorteilhaft sind, lassen sich in die erfindungsgemäße Bremsscheibe ohne zusätzlichen Aufwand einbringen.

Die Lüftungskanäle können gerade ausgebildet sein und in Radialrichtung verlaufen. Daneben ist natürlich auch ein gekrümmter, zum Beispiel spiralförmiger Verlauf der Lüftungskanäle denkbar.

In bevorzugter Weiterbildung der Erfindung sind beide Hälften der Bremsscheibe in Form und Größe identisch ausgebildet.

Durch eine derartige Geometrie läßt sich der Herstellungsaufwand zur Herstellung der Bremsscheibe deutlich reduzieren. So kann ein einziges Preßwerkzeug zur Herstellung beider Hälften verwendet werden, wodurch die Werkzeugkosten halbiert werden.

In bevorzugter Weiterbildung der Erfindung weist jede Rippe eine erste, in einer Radialebene verlaufende Stützfläche auf, die über eine geneigte Fläche in eine zweite, in einer Radialebene verlaufende Stützfläche übergeht, die einen größeren Abstand von der Reibfläche aufweist als die erste Stützfläche.

Durch eine derartige Formgebung wird eine möglichst gute und gleichmäßige Krafteinleitung von außen auf die beiden Reibflächen einwirkenden Bremsdrücken in die Bremsscheibe gewährleistet, da durch die ebenen Stützflächen große Querschnitte zur Kraftübertragung zur Verfügung stehen. Die dazwischen vorgesehenen geneigten Flächen, die entweder senkrecht zur Radialebene verlaufen können, schräg dazu oder auch als gekrümmte Flächen ausgebildet sein können, dienen zur formschlüssigen Festlegung der einen Hälfte an der anderen Hälfte.

Gemäß einer vorteilhaften Weiterbildung der Erfindung sind an der Innenseite einer jeden Hälfte im wesentlichen radial verlaufende Nuten ausgebildet, zwischen denen die Rippen erhaben vorstehen, wobei jeweils vier Rippen in Umfangsrichtung nacheinander so angeordnet sind, daß die ersten Stützflächen der ersten und der benachbarten zweiten Rippe zueinander weisen, während die ersten Stützflächen der zweiten und der nachfolgenden dritten Rippe voneinander weg weisen und die ersten Stützflächen der dritten und der nachfolgenden vierten Rippe wiederum zueinander weisen.

Durch eine derartige Ausgestaltung wird es ermöglicht, beide Hälften in Form und Größe identisch auszubilden. Jedoch sind grundsätzlich auch andere Geometrien denkbar, die eine identische Ausgestaltung der beiden Hälften ermöglichen.

In vorteilhafter Weiterbildung der Erfindung weist die Bremsscheibe eine zentrale Befestigungsöffnung zur Befestigung mittels eines Flansches an einem Rad auf, wobei die Reibflächen durchgehend eben zur reibschlüssigen Verbindung mit dem Flansch ausgebildet sind oder von der Befestigungsöffnung ausgehende Nuten zur formschlüssigen Verbindung mit dem Flansch aufweisen.

Diese Maßnahme hat den Vorteil, daß bei einer lediglich reibschlüssigen Verbindung zwischen dem Flansch und der Bremsscheibe keinerlei Kerbspannungen von außen in die Bremsscheibe eingeleitet werden. Jedoch ist es grundsätzlich auch möglich, von der Befestigungsöffnung ausgehende Nuten zur formschlüssigen Verbindung mit dem Flansch zu verwenden, sofern eine durchgehend formschlüssige Verbindung zwischen beiden Hälften der Bremsscheibe und der Aufnahme am Rad gewünscht ist.

Eine erfindungsgemäße Bremsscheibe läßt sich in an sich bekannter Weise in einer Scheibenbremse verwenden, die einen Bremssattel aufweist, der die Bremsscheibe in einem bestimmten Bereich beidseitig von außen umschließt und an die Reibflächen anpreßbare Bremsbeläge aufweist.

In bevorzugter Weiterbildung der Erfindung sind die Rippen der Bremsscheibe derart voneinander beabstandet, daß die Bremsbeläge mindestens zwei Rippen der Bremsscheibe überdecken.

Durch eine derartige Gestaltung wird erreicht, daß der von beiden Seiten auf die Bremsscheibe einwirkende Anpreßdruck möglichst gleichmäßig in die Bremsscheibe eingeleitet wird und daß Kipp- oder Biegemomente weitgehend vermieden werden.

In vorteilhafter Weiterbildung dieser Ausführung weist der Flansch zwei Teilflansche auf, die die Reibflächen der Bremsscheibe mit einer ebenen Ringfläche an der Innenseite jeweils teilweise überdecken, und wobei Spannmittel zur Verspannung der Teilflansche gegeneinander vorgesehen sind, um eine reibschlüssige Verbindung zwischen der Bremsscheibe und dem Innenflansch zu gewährleisten.

Auf diese Weise wird eine besonders schonende Drehmomentübertragung zwischen Bremsscheibe und Rad ermöglicht, ohne daß durch Schrauben oder dgl. Kerbspannungen in die Bremsscheibe eingeleitet werden können, was sich besonders vorteilhaft auf die Sicherheit gegen Bruchgefahr bei einer Herstellung aus Verbundkeramik auswirkt.

Gemäß einer alternativen Ausführung sind an zumindest einer Reibfläche von der Verbindungsöffnung ausgehende Nuten vorgesehen, in die entsprechende Stege des Flansches formschlüssig eingreifen.

Eine derartige Ausgestaltung ist vorteilhaft, wenn eine durchgehend formschlüssige Verbindung zwischen den beiden Hälften der Bremsscheibe und der Befestigung am Rad gewünscht ist.

In Weiterbildung des erfindungsgemäßen Herstellverfahrens wird die Verbundkeramik mit folgenden Schritten hergestellt:
- Herstellen eines unter Hitzeeinwirkung formbaren Prepregs aus mindestens einer Schicht aus Langfasern unter Zusatz von organischen Precursoren und vorzugsweise unter Zusatz von Füllmitteln;
- Herstellen einer unter Hitzeeinwirkung formbaren Mischung aus Kurzfasern und von organischen Precursoren vorzugsweise unter Zusatz von Füllstoffen;
- Einbringen mindestens eines Prepregs mit einer aus der Mischung bestehenden Schicht in eine Form und Pressen unter Hitzeeinwirkung zur Herstellung eines Grünlings;
- Pyrolysieren des Grünlings zur Herstellung eines porösen Formkörpers;
- Schmelzinfiltrieren des porösen Formkörpers mit einer Schmelze, vorzugsweise mit einer Siliziumschmelze, zur Herstellung eines Formkörpers mit reaktionsgebundenen Fasern.

Auf diese Weise läßt sich die Herstellung des Keramikkörpers deutlich vereinfachen, da das Prepreg mittels eines standardisierten Herstellungsverfahrens hergestellt werden kann und dann nur in der gewünschten Form unter Hitzeeinwirkung zusammen mit der Mischung, die Kurzfasern enthält, ausgeformt werden muß. Der so gebildete Formkörper kann endkonturnah gefertigt werden, so daß nach der anschließenden Pyrolyse und Schmelzinfiltration nur eine geringe Nachbearbeitung notwendig ist.

Dabei werden vorzugsweise mehrere Prepregs, die Lang- und/oder Kurzfasern enthalten können, zu einem Laminat zusammengelegt, bevor das Laminat in der Form unter Hitzeeinwirkung ausgeformt wird.

Dabei kann die Mischung aus Kurzfasern und organischen Prekursoren, der vorzugsweise Füllstoffe zugesetzt sind, entweder in ein oder mehreren Prepregs eingebracht sein und dann mit den langfaserverstärkten Prepregs laminiert werden, oder aber separat hergestellt werden, z.B. durch Aufbaugranulation, um so eine möglichst homogene kurzfaserverstärkte Randschicht zu erreichen.

Die Mischung, aus der die Randschicht hergestellt wird, kann auch bereits in die betreffende äußere Schicht des Langfaser-Prepregs mit eingebracht werden. Zur Erzielung größerer Schichtdicken werden vorzugsweise mehrere Prepregs, die ausschließlich mit Kurzfasern verstärkt sind, verwendet. So können eine Mehrzahl von Prepreg-Schichten laminiert (übereinander gelegt) werden und ggf. verschiedene UD-Schichten und gewebte Schichten durch Aufeinanderlegen verschiedener Prepregs miteinander kombiniert werden.

Zur Herstellung des Prepregs können grundsätzlich verschiedene Verfahren verwendet werden.

Als besonders günstiges Verfahren zur Herstellung eines Prepregs hat sich gemäß der Erfindung das SMC-Verfahren ("Sheet Molding Compounding") erwiesen, das zur Herstellung von glasfaserverstärkten Verbundwerkstoffen grundsätzlich bereits bekannt ist, nicht jedoch zur Herstellung von faserverstärkten Keramikwerkstoffen.

Danach wird ein Trägerfilm von einem Vorrat abgewickelt, anschließend ein organischer Precursor und Fasern auf den Trägerfilm von oben zugeführt, schließlich ein weiterer organischer Precursor und ein weiterer Trägerfilm von oben zugeführt, das zwischen den beiden Trägerfilmen eingeschlossene Material kompaktiert und auf einem Vorrat aufgewickelt. Anschließend wird der Precursor gealtert, was bei Raumtemperatur über eine Zeitdauer von einigen Stunden bis Tagen erfolgen kann, um so eine Andickung bzw. eine Teilvernetzung zu erreichen. Nach ausreichender Alterung des Precursors können die beiden Trägerfolien von den beiden Seiten des Prepregs abgelöst werden und das Prepreg zur Herstellung des Grünlings zugeschnitten werden. Durch Lamination mehrerer Prepregs entsteht ein Vielschichtaufbau, der in einer geeigneten Form verpreßt wird.

Nach dem SMC-Verfahren werden die Fasern in Form von Langfasern zusammen mit dem organischen Precursor abgewickelt. Sofern Kurzfasern erzeugt werden sollen, können die Fasern auch während der Prepreg-Herstellung durch eine Schneideinrichtung (Chopper) auf die gewünschte Länge gebracht werden, die dann in die organische Prepregschicht mit eingebracht werden.

Dabei ist es möglich, in einem einzigen Herstellvorgang eine langfaserverstärkte Schicht mit einer kurzfaserverstärkten Schicht zu kombinieren.

Alternativ kann die kurzfaserverstärkte Schicht für den Randbereich natürlich auch auf andere Weise hergestellt werden (z.B. durch Granulation) und später mit den langfaserverstärkten Prepregs kombiniert werden.

Eine weitere Variante zur Herstellung eines Grünlings besteht in dem sogenannten RTM-Verfahren, das gleichfalls zur Herstellung von glasfaserverstärkten Kunststoffen bekannt ist.

Nach dieser Verfahrensvariante wird ein Fasergerüst aus Langfasern in einer Form vorgelegt, anschließend ein organischer Precursor in die Form unter Druck eingespritzt und geformt. Erfindungsgemäß wird nun auf den so gebildeten Körper wenigstens eine Schicht aus einer Mischung aus organischem Precursor und Kurzfasern und ggf. Füllstoffen aufgebracht und der Körper in einer Form unter Hitzeeinwirkung nachgeformt, bevor der so hergestellte Grünling pyrolisiert und anschließend schmelzinfiltriert wird. Alternativ ist es denkbar, Kurzfasern zusammen mit dem organischen Precursor in die Form einzuspritzen.

Hierbei wird also die Formgebung und die Faser-Matrix-Integration in einem Schritt durchgeführt.

Als organischer Precursor für die vorgenannten Verfahren wird vorzugsweise ein Pech oder ein Harz, insbesondere ein Phenolharz oder ein Furanharz verwendet.

Eine weitere Variante zur Herstellung eines langfaserverstärkten Prepregs besteht in der sogenannten Schlickerinfiltration.

Danach werden Langfaser-Rovings abgewickelt und mittels eines Tauchverfahrens mit einem Schlicker bestehend aus einem organischen oder metallorganischen Precursor, vorzugsweise einem Polysilan, einem Polysiloxan oder einem Polycarbosilan, sowie mit Lösungsmitteln und Füllstoffen infiltriert und anschließend auf einem Ablegekern aufgewickelt.

Das so hergestellte Prepreg kann dann mit kurzfaserverstärkten Massen in einem Preßwerkzeug kombiniert und anschließend in der zuvor bereits erläuterten Weise weiter verarbeitet werden, um eine geeignete Struktur mit kurz- und langfaserverstärkten Schichten zu realisieren.

Die zuvor erläuterten Herstellverfahren können z.B. zur Herstellung einer einstückigen Bremsscheibe oder einer innenbelüfteten Bremsscheibe verwendet werden, die aus zwei Hälften zusammengesetzt wird.

Sofern die Bremsscheibe aus zwei Hälften hergestellt wird, wird vorzugsweise zumindest ein Prepreg, das zumindest eine langfaserverstärkte Schicht aufweist, mit einer kurzfaserverstärkten Mischung in ein Preßwerkzeug eingebracht und unter Hitzeeinwirkung zur Herstellung einer ersten Hälfte der Bremsscheibe gepreßt, während zumindest ein weiteres Prepreg in vorzugsweise dasselbe Preßwerkzeug eingebracht und unter Hitzeeinwirkung gepreßt wird, um eine zweite Hälfte der Bremsscheibe herzustellen. Anschließend werden die beiden Hälften unter Luftabschluß zur Herstellung eines porösen Formkörpers pyrolisiert und sodann mit einer reaktiven Schmelze schmelzinfiltriert, vorzugsweise mit einer Siliziumschmelze.

Durch das Zusammenfügen der beiden Hälften vor der Pyrolyse bzw. Schmelzinfiltration des durch Pyrolyse hergestellten porösen Formkörpers mit einer Siliziumschmelze wird eine besonders innige Verbindung der beiden Hälften miteinander erreicht, da sich teilweise Fasern der einen Hälfte in der Oberfläche der anderen Hälfte verhaken und bei der nachfolgenden Schmelzinfiltration sogar beide Hälften teilweise durch die in das poröse Skelett beider Hälften eingedrungenen durchgehenden metallischen Einschlüsse stoffschlüssig miteinander verbunden werden. Darüber hinaus ergibt sich durch den Mechanismus der Reaktionsbindung zwischen Silizium und Kohlenstoff eine besonders innige Verbindung beider Hälften. Während der Schmelzinfiltration geht auch im Grünling vorhandenes SiC zumindest teilweise wieder in Lösung und scheidet bei der späteren Abkühlung als sekundäres SiC aus, was zusätzlich die Verbindung beider Hälften verbessert.

Es versteht sich, daß unter dem Begriff "Siliziumschmelze" auch eine solche Schmelze zu verstehen ist, die neben Silizium zulegierte Bestandteile, insbesondere Eisen und Chrom, enthält, was wegen deutlich reduzierter Eigenspannungen infolge von Volumenveränderungen besonders bevorzugt ist, wie im einzelnen in der DE-A-197 11 831 erläutert ist.

Es versteht sich, daß auch die übrigen vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Teilansicht einer Scheibenbremse mit einer erfindungsgemäßen Bremsscheibe in vereinfachter Darstellung;
- Fig. 2: eine Aufsicht auf eine Hälfte der Bremsscheibe gemäß Fig. 1;
- Fig. 3: eine Teilansicht einer Abwicklung der erfindungsgemäßen Bremsscheibe von der Stirnseite aus gesehen in vergrößerter Darstellung;
- Fig. 4: eine Hälfte der Bremsscheibe gemäß Fig. 3, zum Zwekke der besseren Erkennbarkeit ohne die zweite Hälfte der Bremsscheibe;
- Fig. 5: eine Formhälfte eines Preßwerkzeuges zur Herstellung einer erfindungsgemäßen Bremsscheibe;
- Fig. 6: eine Aufsicht einer Abwandlung der erfindungsgemäßen Bremsscheibe;
- Fig. 7: einen Schnitt durch eine weitere Ausführung einer erfindungsgemäßen Bremsscheibe zusammen mit einem Flansch zur Befestigung derselben;
- Fig. 8: den grundsätzlichen Aufbau eines Prepregs in perspektivischer, teilweise angeschnittener vergrößerter Darstellung;
- Fig. 9: die schematische Darstellung eines Prepregs im Querschnitt in vergrößerter Darstellung;
- Fig. 10: einen Teilschnitt durch eine Hälfte im Bereich einer Rippe in stark vergrößerter Darstellung, bei der der Verlauf einzelner Schichten angedeutet ist;
- Fig. 11: eine schematische Darstellung der Herstellung eines Prepregs nach dem SMC-Verfahren und
- Fig. 12: eine schematische Darstellung der Herstellung eines Prepregs nach dem Schlickerinfiltrierverfahren.

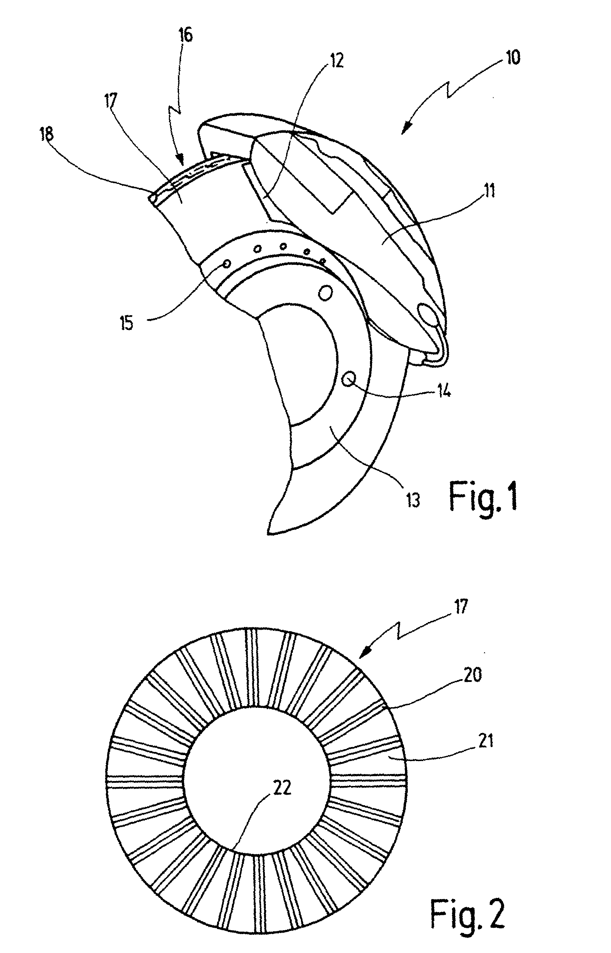

Fig. 1 zeigt eine perspektivische Teildarstellung einer Scheibenbremse, die insgesamt mit der Ziffer 10 bezeichnet ist. Die Scheibenbremse 10 umfaßt eine insgesamt mit 16 bezeichnete Bremsscheibe, die aus zwei Hälften, nämlich einer ersten Hälfte 17 und einer zweiten Hälfte 18, zusammengesetzt ist und von radialen Lüftungskanälen durchsetzt ist, so daß es sich um eine innenbelüftete Scheibenbremse handelt.

Zur Befestigung der Bremsscheibe 16 am Rad ist ein insgesamt mit der Ziffer 13 bezeichneter topfförmiger Flansch vorgesehen, der mit einem zweiten auf der Rückseite der Bremsscheibe 16 angeordneten, nicht dargestellten Teilflansch über Spannmittel 15 verbunden ist, die z.B. als Nieten ausgebildet sein können. Zur Befestigung am Rad sind an der Vorderseite des Flansches 13 Bohrungen 14 vorgesehen, durch die Radmuttern eingeschraubt werden können.

Ferner ist in Fig. 1 noch der Bremssattel 11 schematisch angedeutet, in dem auf beiden Seiten der Bremsscheibe 16 Bremsbeläge 12 aufgenommen sind, die zur Betätigung der Bremse hydraulisch von beiden Seiten an die Bremsscheibe 16 angepreßt werden.

Die Bremsscheibe 16 besteht, wie bereits erwähnt, aus zwei Hälften 17, 18, von denen eine Hälfte 17 in Fig. 2 in der Aufsicht von der Innenseite her dargestellt ist.

In Fig. 2 ist eine zentrale kreisförmige Befestigungsöffnung 22 erkennbar. Ferner ist aus Fig. 2 zu ersehen, daß sich eine Mehrzahl von radial verlaufenden Rippen 20 in gleichmäßigen Abständen über die Ringfläche der Hälfte 17 erstreckt, wobei zwischen benachbarten Rippen 20 radial verlaufende Lüftungskanäle 21 gebildet sind.

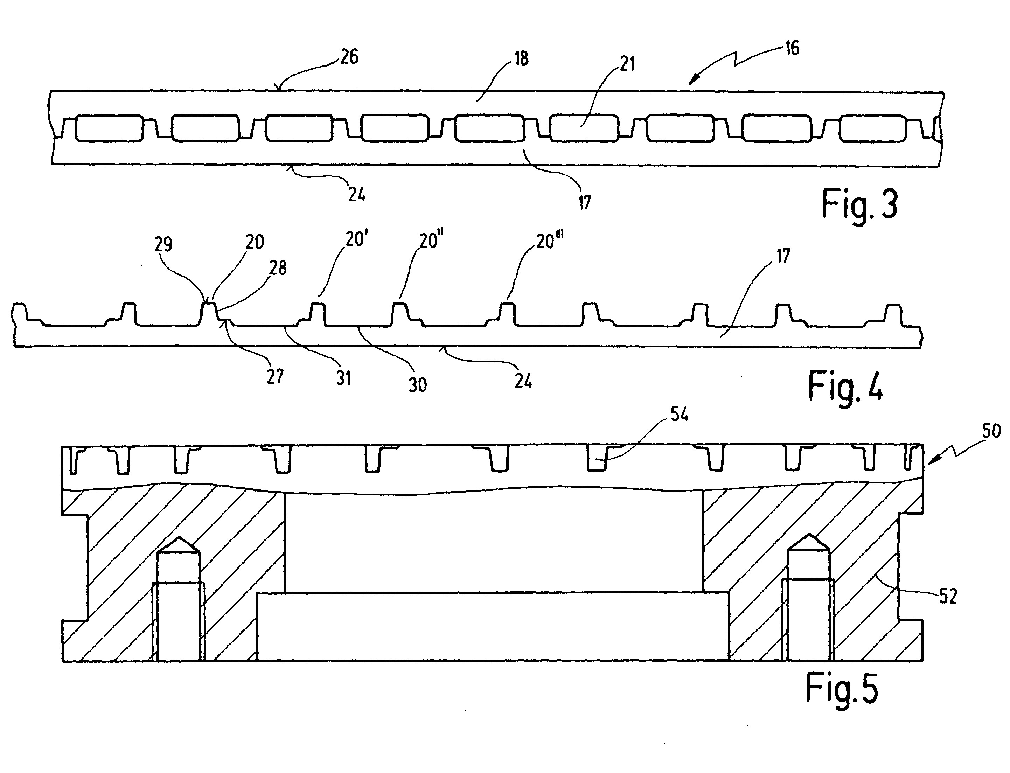

Form und Ausgestaltung dieser Rippen und Lüftungskanäle werden nachfolgend anhand von Fig. 3 und 4 näher erläutert.

Wie aus Fig. 3 ersichtlich ist, die eine Abwicklung der beiden aufeinandergefügten Hälften 17, 18 an der Stirnfläche in vergrößerter Darstellung zeigt, sind die Hälften 17 und 18 derart ausgebildet, daß die Rippen beider Hälften 17, 18 formschlüssig ineinandergreifen und dazwischen die Lüftungskanäle 21 gebildet sind.

Hierzu sind beide Hälften 17, 18 in Form und Größe identisch ausgebildet und können somit mit einem einzigen Preßwerkzeug hergestellt werden. Die Form der Rippen ist aus der Darstellung der Abwicklung der Hälfte 17 in Fig. 4 am besten ersichtlich.

Jede Rippe 20, 20', 20'', 20''' weist eine erste in einer Radialebene verlaufende Stützfläche 27 auf, die über eine geneigte Fläche 28 in eine zweite Stützfläche 29 übergeht, die gleichfalls in einer Radialebene verläuft. Die geneigte Fläche 28 zwischen den beiden Stützflächen 27, 29 kann, wie in Fig. 4 dargestellt, gegenüber der Radialebene etwa um einen stumpfen Winkel geneigt sein, aber auch senkrecht auf einer Radialebene stehen. Des weiteren ist es denkbar, die geneigte Fläche 28 zwischen den beiden Stützflächen 27, 29 auch gekrümmt auszubilden. Darüber hinaus könnten natürlich auch die Stützflächen 27, 29 eine gekrümmte Form aufweisen. Die den Rippen gegenüberliegende Seite der Hälfte 17 ist als ebene Reibfläche 24 ausgebildet. Die ersten Stützflächen 27 weisen einen geringeren Abstand von der Reibfläche 24 auf als die zweiten Stützflächen 29. Insgesamt weist somit jede Rippe 20, 20', 20", 20''' eine etwa stufenförmige Gestalt auf.

Die Anordnung benachbarter Rippen ist nun so getroffen, daß jeweils zwei in Umfangsrichtung benachbarte Rippen, also etwa die Rippen 20 und 20', so verlaufen, daß ihre ersten Stützflächen 27 zueinander weisen. Zwischen diesen ersten Stützflächen 27 ist eine in Radialrichtung verlaufende breite Nut 31 gebildet. Die zweite Rippe 20' ist nun bezüglich ihrer nachfolgenden benachbarten Rippe 20" spiegelsymmetrisch ausgebildet, d.h. die ersten Stützflächen 27 der Rippe 20' und der nachfolgenden Rippe 20" weisen nicht zu der zwischen den beiden Rippen 20', 20'' gebildeten Nut 30 hin, sondern zur ersten Rippe 20 hin bzw. zur nachfolgenden Rippe 20"' hin.

Dabei ist die Nut 30 zwischen den Rippen 20', 20" schmaler als die Nut 31 zwischen den Rippen 20, 20', besitzt an ihrem Nutengrund jedoch die gleiche Breite wie die Nut 31, da sich beide Hälften 17, 18 komplementär zueinander ergänzen, so daß insgesamt sämtliche Lüftungskanäle 21 eine gleiche Form und Größe aufweisen.

Es versteht sich, daß die Lüftungskanäle 21, die gemäß Fig. 2 in radialer Richtung verlaufen, auch anstelle einer geraden Form eine gekrümmte Form aufweisen können, also z.B. spiralförmig verlaufen können.

Fig. 5 zeigt einen Querschnitt durch eine Formhälfte 52 eines insgesamt mit der Ziffer 50 bezeichneten Preßwerkzeuges zur Herstellung beider Hälften 17, 18 der Bremsscheibe 16. Dabei sind in der Oberfläche der Formhälfte 52 Nuten 54 ausgebildet, die zur Erzeugung der Rippen eine den Rippen komplementäre Form aufweisen.

Die andere Formhälfte des Preßwerkzeuges 50 weist dann eine geeignete ringförmige Ausnehmung zur Erzeugung der ebenen Reibfläche auf.

Ein besonderer Vorteil der Formgebung der beiden Hälften 17, 18 besteht darin, daß ein und dasselbe Preßwerkzeug 50 zur Herstellung beider Hälften 17, 18 verwendet werden kann.

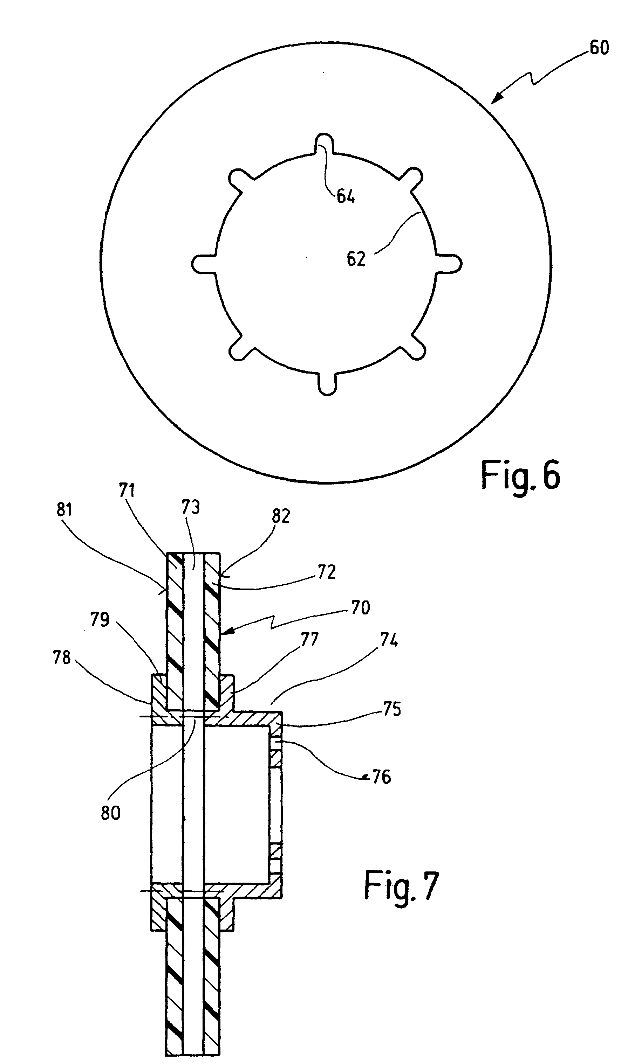

Um die Bremsscheibe am Rad formschlüssig befestigen zu können, können, wie aus Fig. 6 ersichtlich ist, von einer zentralen Öffnung 62 der Bremsscheibe 60 ausgehende Nuten 64 vorgesehen sein, die sich radial nach außen um einen geringen Betrag erstrecken und die vorzugsweise an ihrem Ende einen halbkreisförmigen Abschluß aufweisen. In diese Nuten 64 greifen dann entsprechende Stege einer Aufnahme ein, mittels derer die Bremsscheibe 60 am Rad aufgenommen ist.

Eine Alternative hierzu ist anhand von Fig. 7 dargestellt.

Dabei wird die insgesamt mit der Ziffer 70 bezeichnete Bremsscheibe, die aus den beiden Hälften 71 und 72 besteht, lediglich reibschlüssig an einem Flansch 74 aufgenommen, der aus zwei Teilflanschen 75, 78 besteht. Der erste Teilflansch 75 ist topfförmig ausgebildet und weist ähnlich der Darstellung in Fig. 1 an seiner Außenseite eine Mehrzahl von Bohrungen 76 auf, die zur Befestigung mittels Radmuttern dienen. Ferner weist dieser erste Teilflansch 75 einen nach außen hervorstehenden Ringsteg 77 auf, mit dem dieser Teilflansch 75 an der Reibfläche 82 der Hälfte 72 anliegt. Auf der gegenüberliegenden Seite ist ein zweiter Teilflansch 78 vorgesehen, der mit einem Ringsteg 79 auf der Reibfläche 81 der Hälfte 71 anliegt. Beide Teilflansche 75, 78 sind durch Verbindungselemente 80, z.B. durch Schrauben, gegeneinander verspannt, so daß die beiden Ringstege 77, 79 an die Reibflächen 81, 82 angepreßt werden und somit eine reibschlüssige Verbindung zwischen dem Flansch 74 und der Bremsscheibe 70 gewährleistet ist.

Dabei muß die Anpreßkraft zwischen den beiden Teilflanschen 75, 78 lediglich so groß bemessen sein, daß das maximal mögliche Bremsmoment übertragen werden kann.

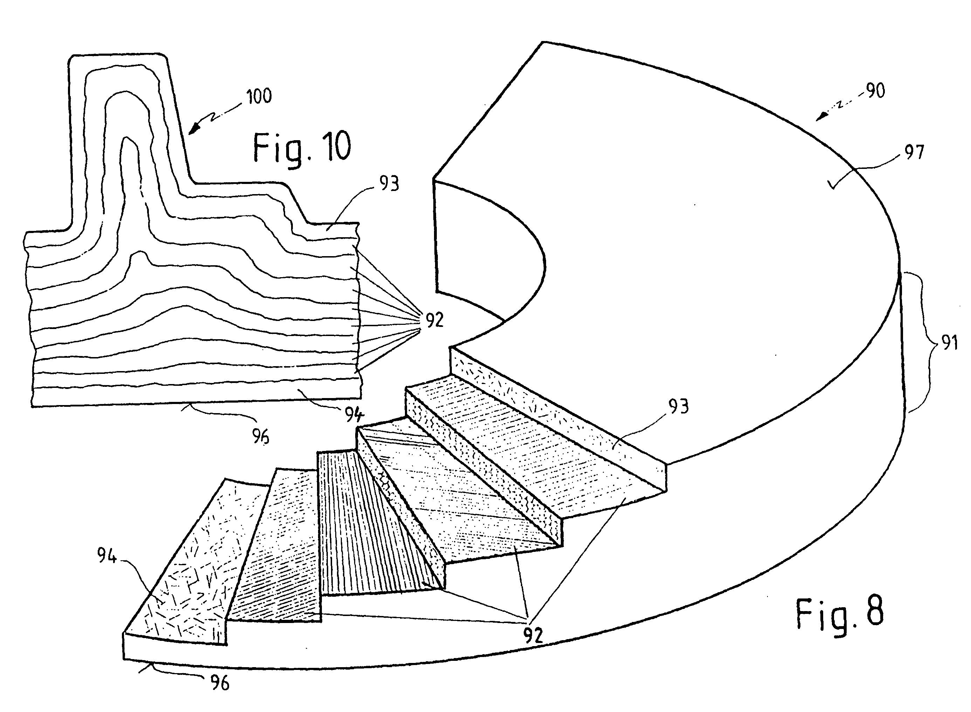

Eine solche Bremsscheibe, oder allgemein ein solcher Formkörper, wird aus einzelnen Faserschichten laminiert, wie beispielhaft anhand der Fig. 8 bis 10 beschrieben wird.

Hierbei werden vorzugsweise sogenannte Prepregs verwendet, in dem eine oder mehrere Laminatschichten enthalten sind. Dabei kann es sich um UD-Schichten, die vorzugsweise jeweils zueinander winklig versetzt angeordnet sind, z.B. um jeweils 45° zueinander räumlich versetzt sind, und/oder um Cross-ply-Schichten (gewebte Schichten), handeln.

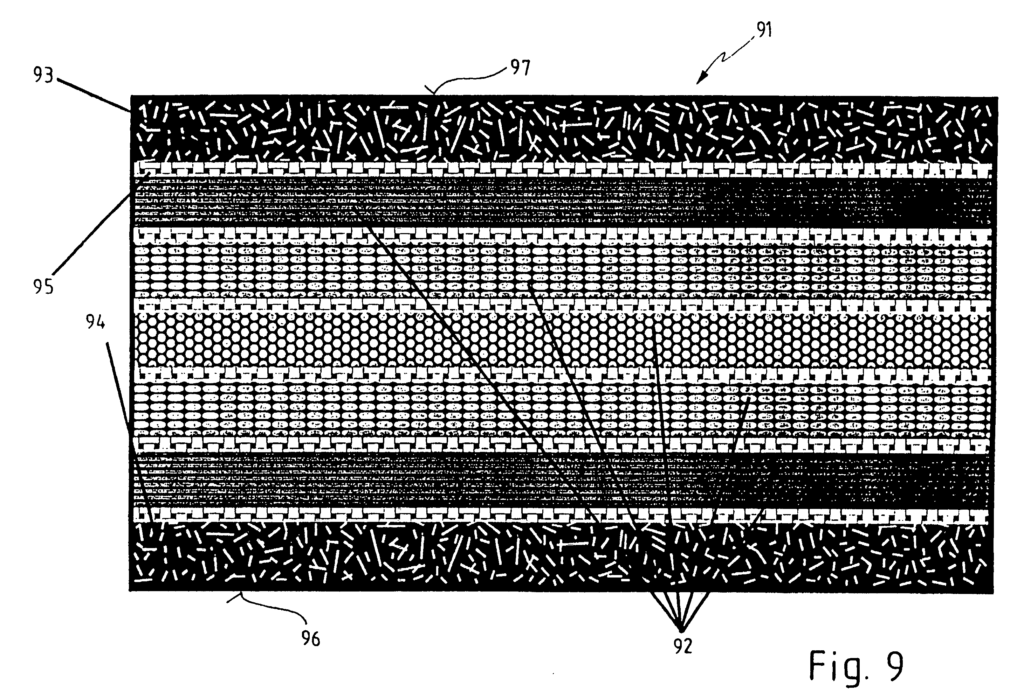

Ein Laminat, das aus mehreren solche Prepregs besteht, ist in den Figuren 8 und 9 dargestellt und insgesamt mit der Ziffer 91 bezeichnet.

Gemäß Fig. 8 sind insgesamt vier UD-Schichten schematisch angedeutet, die zueinander winklig versetzt angeordnet sind. An der Oberseite und an der Unterseite des Laminats 91 ist jeweils eine Schicht 93 bzw. 94 angebunden, die vorzugsweise statistisch verteilte Kohlenstoff-Kurzfaserbündel enthält.

Während die mit Langfasern verstärkten UD-Schichten 92 für die notwendige Schadenstoleranz sorgen, wird durch die beiden mit Kurzfasern verstärkten Schichten 93 und 94 jeweils eine besonders verschleißfeste, gas- und flüssigkeitsdichte Randschicht gebildet, deren Außenfläche 96, 97 als spätere Reibschicht für einen Bremsbelag ausgebildet wird.

Zusätzlich können zwischen den einzelnen UD-Schichten 92 gewebte Schichten 95 vorgesehen sein, wie in Fig. 9 schematisch dargestellt ist.

Aus Gründen einer kostengünstigen Herstellung wird jedoch in der Regel auf die Einbindung derartiger Schichten aus gewebtem Material verzichtet.

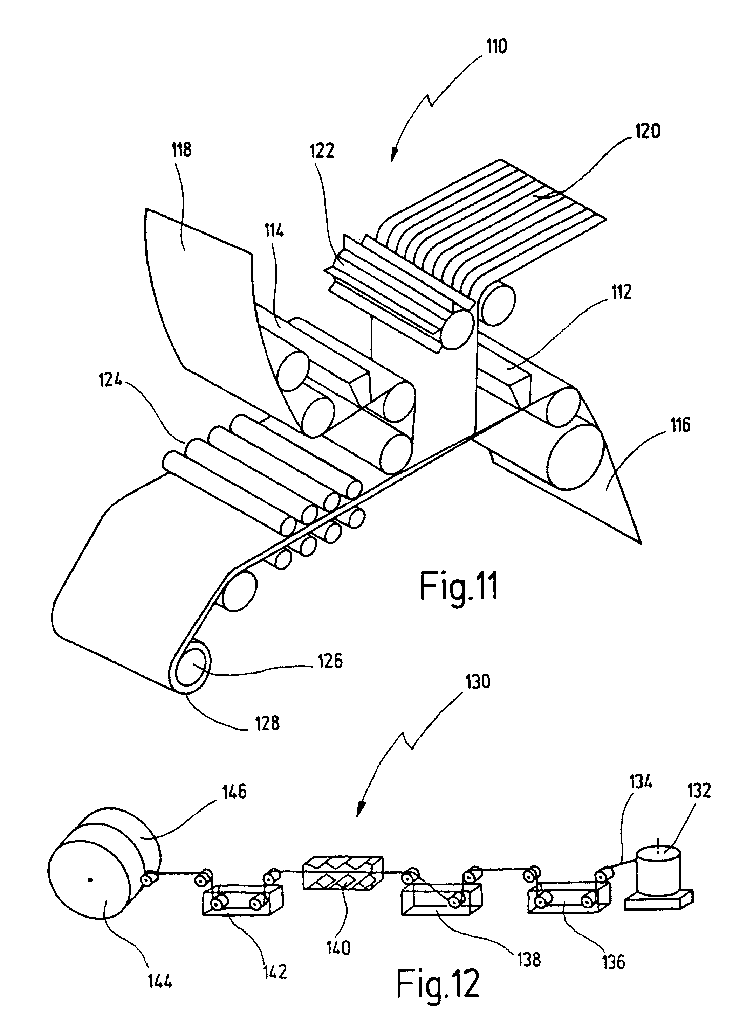

Aus Fig. 10, die eine aus einem solchen Laminat 91 hergestellte Hälfte 100 zeigt, ist ersichtlich, daß die Schichten 92 bis 94 des Laminats 91 jeweils bis in die Rippen hineingeführt sind, so daß die UD-Schichten bzw. Cross-ply-Schichten durch die Rippen hindurch verlaufen und so im Bereich der Rippen eine gute Festigkeit und gute Formtreue gewährleisten.

Es versteht sich, daß der Schichtenaufbau je nach den gestellten Anforderungen an den Formkörper in geeigneter Weise gradiert werden kann, um eine hohe mechanische Stabilität und Schadenstoleranz des Keramikkörpers als Ganzes zu gewährleisten und um eine besonders hohe Verschleißfestigkeit an den Außenflächen der Randschichten zu gewährleisten.

Zwei mögliche Herstellvarianten zur Herstellung eines Prepregs werden im folgenden anhand der Fig. 11 und 12 kurz erläutert.

Fig. 11 zeigt die Herstellung eines Prepregs nach dem SMC-Verfahren, das erfindungsgemäß besonders bevorzugt ist. In Fig. 11 ist eine SMC-Vorrichtung schematisch dargestellt und insgesamt mit der Ziffer 110 bezeichnet.

Nach dem SMC-Verfahren, das zur Herstellung von glasfaserverstärkten Kunststoffen an sich bekannt ist, werden Fasern zwischen zwei Trägerfolien 116, 118 unter Zugabe von organischen Bindemitteln eingewickelt, um so ein Prepreg zu bilden. Die SMC-Vorrichtung 110 weist hierzu eine Reihe von Walzen auf, über die eine untere Trägerfolie 116 geführt wird. Über eine Precursor-Box 112 wird zunächst ein organischer Precursor, in der Regel in Form eines Phenolharzes oder Furanharzes zugeführt. Anschließend werden Fasern 120, die als Rovings von einem nicht dargestellten Faservorrat abgewickelt werden, zugeführt, und von oben über eine weitere Precursor-Box 114 eine weitere Precursor-Schicht zugeführt, auf die eine obere Trägerfolie 118 aufgebracht wird. Die so zusammengeführten Schichten mit Fasern 120 und Precursor, die zwischen den beiden Trägerfolien 116, 118 eingeschlossen sind, werden anschließend mittels einer Walzeinheit 124 kompaktiert und sodann auf einer Rolle 126 aufgewickelt. Alternativ können Fasern 120 vor ihrer Zuführung mittels einer Schneideinrichtung 122 zu Kurzfasern geschnitten werden, die zwischen den Precursor-Schichten eingeschlossen werden. Dem Precursor, bei dem es sich in der Regel um Phenol- oder Furanharze (Thermodure) oder um Peche handelt, werden vorzugsweise Füllstoffe wie etwa Graphit, Ruß oder SiC-Pulver zugesetzt.

Es ist also mit der dargestellten SMC-Vorrichtung sowohl möglich, ein Prepreg herzustellen, das lediglich mit Langfasern oder lediglich mit Kurzfasern verstärkt ist. Es versteht sich, daß die hier nur kurz skizzierte Vorrichtung auch derart abgewandelt werden kann, daß eine Langfaserschicht mit einer Kurzfaserschicht in einer gemeinsamen Prepregschicht kombiniert wird.

Nach dem Aufwickeln des so hergestellten Verbundes auf der Walze 126 erfolgt zunächst eine Alterung des Prepregs, was bei Raumtemperatur über eine Zeitdauer von mehreren Stunden bis zu mehreren Tagen erfolgen kann, um eine Andickung des Prepregs zu erreichen, was eine gewisse Teilvernetzung des Precursors bedeutet.

Anschließend können die beiden Trägerfolien abgezogen werden und das Prepreg weiterverarbeitet werden.

Nach der Herstellung des Prepregs wird dieses auf die geeignete Größe zugeschnitten bzw. mehrere Prepreg-Lagen in geeigneter Weise übereinandergelegt und in einer geeigneten Form, etwa im Preßwerkzeug 50 bei erhöhter Temperatur, die meist in der Größenordnung zwischen 100 und 200°C liegt, verpreßt und ausgehärtet, wobei eine gute Formfüllung durch die Plastifizierung des Matrixharzes bei erhöhter Temperatur gewährleistet ist.

Ein solchermaßen hergestellter Grünling wird in einem Pyrolyseofen vorzugsweise unter Stickstoffatmosphäre (oder Methanatmosphäre) auf etwa 1.000°C erwärmt. Hierbei werden die organischen Binderbestandteile unter Volumenschwund zu Kohlenstoff abgebaut. Es ergibt sich so ein poröser Formkörper. Dieser so erhaltene carbonisierte Formkörper wird dann in einem Graphittiegel unter Vakuum bei etwa 1.600°C mit einer Siliziumschmelze infiltriert, die ggf. Zusätze von Eisen und Chrom enthalten kann, wie grundsätzlich aus der DE-A-197 11 831 bekannt ist.

Eine weitere Variante zur Herstellung langfaserverstärkter Prepregs besteht in der Verwendung einer Schlickerinfiltriereinrichtung, die in Fig. 12 schematisch dargestellt und insgesamt mit der Ziffer 130 bezeichnet ist.

Hiernach werden von einer Faserabwickeleinrichtung 132 Rovings 134 abgewickelt, die durch ein Beschichtungsbad 136 ein nachfolgendes Fällbad 138, eine Trockenstrecke 140 und ein Infiltrierbad 142 geführt werden und anschließend auf einem Ablagekern 144 abgelegt werden, auf dem das Prepreg 146 aufgenommen wird. Es handelt sich also um ein Tauchverfahren mit Schlicker (bestehend aus Precursor, Füllstoffen und Lösungsmittel), mittels dessen die Rovings 134 infiltriert werden. Das vorgeschaltete Beschichtungsbad 136, das Fällbad 138 und die Trockenstrecke 140 dienen zu einer geeigneten Vorbehandlung. Als Precursoren werden organische oder metallorganische Precursoren verwendet, vorzugsweise Polysilane, Polysiloxane oder Polycarbosilane.

Den Precursoren werden vorzugsweise Füllstoffe zugemischt, wobei es sich etwa um SiC handeln kann (inert) oder um reaktive Füllstoffe, wie Carbidbildner (Ti, Al, Cr) oder B, das unter N₂ zu BN umgesetzt wird.

Die so hergestellten Prepregs werden anschließend mit Kurzfasermassen zusammengefügt und in einem beheizten Preßwerkzeug ausgehärtet. Anschließend erfolgt die Pyrolyse (z.B. 36 h bei max. bis 1.400°C an N₂ oder unter Vakuum). Dabei wird ein metallorganischer Precursor zu Mineralphasen (α-SiC, C) umgesetzt. Dabei reagieren die Füllstoffe, soweit es sich um Carbidbildner oder B handelt. Besonders günstig ist die Verwendung von B als Füllstoff, da eine Nitridierung des B (BN-Bildung ab 1.400°C) durch eine starke Volumenzunahme eine Pyrolyseschwindung eliminiert.

Für die Herstellung einer Bremsscheibe aus zwei Hälften gemäß der Fig. 3 und 4 werden die beiden Hälften beispielsweise aus einem nach dem SMC-Verfahren hergestellten Laminat 91 aus mehreren Prepregs im selben Preßwerkzeug 50 bei erhöhter Temperatur verpreßt. Die beiden so hergestellten Grünlinge werden aufeinandergelegt und dann gemeinsam pyrolysiert und anschließend schmelzinfiltriert.

Es versteht sich, daß die verwendeten Prepregs auch lediglich aus Langfaserschichten bestehen können und daß die zumindest eine Randschicht, die Kurzfasern enthält, mittels eines anderen Verfahrens hergestellt werden kann. Das so hergestellte Granulat wird dann zusammen mit dem Prepreg in eine geeignete Form eingebracht und zur Herstellung des Grünlings verpreßt.

### Beispiel

Eine massive Bremsscheibe der in Fig. 6 gezeigten Form mit 280 mm Außendurchmesser und einer Stärke von etwa 13 mm wurde aus 12 Langfaser-UD-Prepregs und 16 Kurzfaser-Prepregs hergestellt. Dabei wurden je drei Prepreg-Schichten mit einer Ausrichtung von 0°, 90° und 45° (Winkelangabe bezieht sich jeweils auf den Winkel zur ersten Schicht) laminiert und zwei solche Laminatverbunde spiegelverkehrt aufeinandergelegt. Zwei solcher Laminate mit je sechs Schichten wurden miteinander kombiniert. Auf jeder Außenseite wurden acht Kurzfaser-Prepregs auflaminiert. Alle Prepregs waren nach dem SMC-Verfahren hergestellt und hatten eine Stärke von ca. 4 mm. Der so gebildete Laminatverbund wurde in einem geeigneten, vorgewärmten Preßzeug bei etwa 150°C mit 210 bar 15 Minuten lang ausgeformt. Dabei ergab sich eine ausgezeichnete Formfüllung. Der so gebildete Grünling wurde aus dem Preßwerkzeug entnommen und in einem Ofen unter Stickstoffatmosphäre mit etwa 50 K/h bis auf etwa 1.100°C erwärmt und bei dieser Temperatur zur Carbonisierung etwa sieben Stunden gehalten. Anschließend erfolgte zunächst eine Abkühlung und dann eine Evakuierung. Unter Vakuum wurde der Grünling nunmehr mit 400 K/h bis auf 1.400°C aufgeheizt, dann mit 60 K/h bis auf 1.650°C erhitzt und bei dieser Temperatur mit einer reinen Siliziumschmelze (ohne Zusätze) siliziert, wozu die Haltezeit etwa 14 Stunden betrug. Anschließend erfolgte eine Abkühlung mit etwa 100 K/h bis auf Raumtemperatur.

Die so hergestellte Bremsscheibe zeichnete sich durch eine endkonturnahe Formgebung aus und mußte nur noch durch Schleifen nachbearbeitet werden. Die Bremsscheibe besaß eine ausgezeichnete mechanische Stabilität, thermische Beständigkeit und Oxidationsbeständigkeit, sowie günstige Reibeigenschaften.

## Patentansprüche

1. Faserverstärkter Keramikkörper bestehend aus einem Kern und einer Randschicht (93, 94), die mit dem Kern verbunden ist und zumindest eine vorzugsweise tribologisch beanspruchbare Außenfläche (96, 97) aufweist, wobei der Kern aus einer oder mehreren Schichten (92) zusammengesetzt ist, von denen mindestens eine mit Langfasern verstärkt ist, die eine Länge von mindestens 50 Millimeter aufweisen, wobei die Randschicht (93, 94) mit Kurzfasern verstärkt ist, die eine Länge von weniger als 50 Millimeter aufweisen, und wobei die Fasern mit einer schmelzinfiltrierten Matrix reaktionsgebunden sind.

2. Keramikkörper nach Anspruch 1, bei dem der Kern mehrere mit Langfasern verstärkte Schichten (UD-Schichten) (92) aufweist, deren Langfasern jeweils in einer Vorzugsrichtung angeordnet sind, wobei die Vorzugsrichtungen mindestens zweier UD-Schichten (92) zueinander winkelversetzt angeordnet sind.

3. Keramikkörper nach Anspruch 1 oder 2, bei dem der Kern mindestens eine Schicht (95) mit gewebten Langfasern oder mit Kurzfasern aufweist.

4. Keramikkörper nach Anspruch 3, bei dem zwischen zwei benachbarten UD-Schichten (92) eine Schicht mit gewebten Langfasern (95) angeordnet ist.

5. Keramikkörper nach einem der vorhergehenden Ansprüche, bei dem die Kurzfasern weitgehend statistisch verteilt angeordnet sind.

6. Keramikkörper nach einem der vorhergehenden Ansprüche, bei dem die Langfasern und Kurzfasern als hochwarmfeste Fasern mit kovalenter Bindung auf der Basis von Silizium, Kohlenstoff, Bor und/oder Stickstoff ausgebildet sind, vorzugsweise als SiC-Fasern, C-Fasern oder SiBCN-Fasern ausgebildet sind.

7. Keramikkörper nach einem der vorhergehenden Ansprüche, **dadurch gekennzeichnet, daß** die Fasern mit einer Matrix aus Siliciumcarbid reaktionsgebunden sind.

8. Bremsscheibe mit einem Keramikkörper nach einem der vorhergehenden Ansprüche, mit zwei miteinander verbundenen Hälften (17, 18; 71, 72; 100), wobei jede Hälfte (17, 18; 71, 72; 100) eine als Reibfläche (24, 26; 81, 82; 102) ausgebildete Außenseite und eine Innenseite aufweist, wobei an der Innenseite zumindest einer Hälfte (17, 18; 71, 72; 100) Rippen (20, 20', 20", 20"') vorgesehen sind, die an der anderen Hälfte (17, 18; 71, 72; 100) anliegen, wobei an den Innenseiten beider Hälften (17, 18; 71, 72; 100) im wesentlichen radial verlaufende Rippen (20, 20', 20", 20''') vorgesehen sind, die zwischen entsprechende Rippen (20, 20', 20", 20"') der jeweils anderen Hälfte (17, 18; 71, 72; 100) formschlüssig eingreifen.

9. Bremsscheibe nach Anspruch 8, bei der zwischen den Rippen (20-20"') der einen Hälfte (17, 18; 71, 72; 100) und den Rippen (20-20"') der anderen Hälfte (17, 18; 71, 72; 100) Lüftungskanäle (21) gebildet sind.

10. Bremsscheibe nach Anspruch 8 oder 9, bei der beide Hälften (17, 18; 71, 72; 100) in Form und Größe identisch ausgebildet sind.

11. Bremsscheibe nach Anspruch 10, bei der jede Rippe (20-20''') eine erste, in einer Radialebene verlaufende Stützfläche (27) aufweist, die über eine geneigte Fläche (28) in eine zweite (29), in einer Radialebene verlaufende Stützfläche übergeht, die einen größeren Abstand von der Reibfläche (24, 26; 81, 82; 102) aufweist als die erste Stützfläche (27).

12. Bremsscheibe nach Anspruch 10 oder 11, **dadurch gekennzeichnet, daß** an der Innenseite einer jeden Hälfte (17, 18; 71, 72; 100) im wesentlichen radial verlaufende Nuten (30, 31) ausgebildet sind, zwischen denen die Rippen (20-20"') erhaben vorstehen, die jeweils erste Stützflächen (27) aufweisen, und wobei jeweils vier Rippen (20-20"') in Umfangsrichtung nacheinander so angeordnet sind, daß die ersten Stützflächen (27) der ersten (20) und der benachbarten zweiten Rippe (20') zueinander weisen, während die ersten Stützflächen der zweiten (20') und der nachfolgenden dritten (20") Rippe voneinander wegweisen und die ersten Stützflächen der dritten (20'') und der nachfolgenden vierten (20''') Rippe wiederum zueinander weisen.

13. Bremsscheibe nach einem der Ansprüche 8 bis 12, mit einer zentralen Befestigungsöffnung (22; 62) zur Befestigung an einem Rad mittels eines Flansches (13; 74), wobei die Reibflächen (24, 26; 81, 82) zur reibschlüssigen Verbindung mit dem Flansch (13; 74) eben ausgebildet sind.

14. Bremscheibe nach Anspruch 13, bei der an zumindest einer Reibfläche von der Befestigungsöffnung (62) ausgehende Nuten (64) zur formschlüssigen Verbindung mit entsprechenden Stegen des Flansches vorgesehen sind.

15. Verfahren zur Herstellung eines faserverstärkten Keramikkörpers, bei dem ein Kern aus mindestens einer Schicht (92) hergestellt wird, die mit Langfasern, die eine Länge von mindestens 50 Millimeter aufweisen, verstärkt ist und der Kern mit einer Randschicht (93, 94) verbunden wird, die mit Kurzfasern, die eine Länge von weniger als 50 Millimeter aufweisen, die eine geringere Länge als die Langfasern aufweisen, verstärkt ist und zumindest eine Außenfläche (96, 97) aufweist, die vorzugsweise tribologisch beanspruchbar ist, mit folgenden Schritten:
- Herstellen eines unter Hitzeeinwirkung formbaren Prepregs (128; 146) aus mindestens einer Schicht (92) aus Langfasern unter Zusatz von organischen Precursoren und vorzugsweise unter Zusatz von Füllmitteln;
- Herstellen einer unter Hitzeeinwirkung formbaren Mischung aus Kurzfasern und von organischen Precursoren vorzugsweise unter Zusatz von Füllstoffen;
- Einbringen des Prepregs (128; 146) mit einer aus der Mischung bestehenden Schicht (93, 94) in eine Form und Pressen unter Hitzeeinwirkung zur Herstellung eines Grünlings;
- Pyrolysieren des Grünlings zur Herstellung eines porösen Formkörpers;
- Schmelzinfiltrieren des porösen Formkörpers mit einer Schmelze, vorzugsweise mit einer Siliziumschmelze, zur Herstellung eines Formkörpers mit reaktionsgebundenen Fasern.

16. Verfahren nach Anspruch 15, bei dem der Kern aus mehreren mit Langfasern verstärkten Schichten (UD-Schichten) (92) hergestellt wird, deren Langfasern jeweils in einer Vorzugsrichtung angeordnet sind, wobei mindestens zwei UD-Schichten (92) verwendet werden, deren Vorzugsrichtungen zueinander winkelversetzt angeordnet sind.

17. Verfahren nach Anspruch 15 oder 16, bei dem mindestens eine Schicht (95) mit gewebten Langfasern in den Kern eingefügt wird.

18. Verfahren nach einem der Ansprüche 15 bis 17, bei dem hochwarmfeste Fasern mit kovalenter Bindung auf der Basis von Silizium, Kohlenstoff, Bor und/oder Stickstoff, vorzugsweise SiC-Fasern, C-Fasern oder SiBCN-Fasern als Langfasern und Kurzfasern verwendet werden.

19. Verfahren nach Anspruch 18, bei dem mehrere kurz- und/oder langfaserverstärkte Prepregs zu einem Laminat (91) zusammengefügt werden, bevor sie unter Hitzeeinwirkung in der Form zu einem Grünling verpreßt werden.

20. Verfahren nach einem der Ansprüche 15 bis 19, bei dem das Prepreg (128) nach dem SMC-Verfahren mit folgenden Schritten hergestellt wird:
- Abwickeln eines Trägerfilms (116) von einem Vorrat;
- Zuführen eines organischen Precursors und von Fasern (120) auf den Trägerfilm (116) von oben;
- Aufbringen eines organischen Precursors und eines weiteren Trägerfilms (118) von oben;
- Kompaktieren des zwischen den beiden Trägerfilmen (116, 118) eingeschlossenene Materials und Aufwikkeln auf einem Vorrat;
- Altern des Precursors, um eine Teilvernetzung zu erreichen.

21. Verfahren nach Anspruch 20, bei dem die Trägerfilme (116, 118) nach dem Altern abgelöst werden, bevor das Prepreg (128) oder ein Laminat (91) aus mehreren Prepregs in der Form zusammen mit der mindestens einen Kurzfasern enthaltenden Randschicht zur Herstellung des Grünlings verpreßt wird.

22. Verfahren nach Anspruch 20 oder 21, bei dem die Fasern (120) während der Zuführung zum Trägerfilm (116) zu Kurzfasern geschnitten werden.

23. Verfahren nach Anspruch 22, bei dem auf eine Schicht mit Langfasern unter Zwischenlage eines organischen Precursors eine weitere Schicht aus Fasern, die zu Kurzfasern zerschnitten werden, sowie weiterer organischer Precursor aufgebracht werden, bevor der zweite Trägerfilm (118) aufgebracht wird.

24. Verfahren nach einem der Ansprüche 15 bis 18, bei dem der Kern nach dem RTM-Verfahren aus einem Fasergerüst aus Langfasern in einer Form vorgelegt wird, anschließend ein organischer Percursor in die Form unter Druck eingespritzt und geformt wird, auf den so gebildeten Körper wenigstens eine Schicht aus einer Mischung aus organischem Precursor und Kurzfasern aufgebracht und der Körper in einer Form unter Hitzeeinwirkung nachgeformt wird, bevor der so hergestellte Grünling pyrolisiert und anschließend schmelzinfiltriert wird.

25. Verfahren nach einem der Ansprüche 15 bis 24, bei dem als organischer Precursor ein Pech oder ein Harz, vorzugsweise ein Phenolharz oder ein Furanharz verwendet wird.

26. Verfahren nach Anspruch 15 oder 19, bei dem ein mit Langfasern verstärktes Prepreg durch Schlickerinfiltration hergestellt wird, indem Fasern abgewickelt und mittels eines Tauchverfahrens mit einem Schlicker bestehend aus einem organischen oder metallorganischen Precursor, vorzugsweise eines Polysilans, eines Polysiloxans oder eines Polycarbosilans, sowie von Lösungsmittel und Füllstoffen infiltriert werden und anschließend auf einem Ablegekern (144) aufgewickelt werden.

27. Verfahren nach einem der Ansprüche 15 bis 26, bei dem die Fasern (120; 134) in Form von Faserbündeln (Rovings) verwendet werden, die entweder als Langfasern mit einer Länge von mindestens 50 Millimetern verarbeitet werden oder zu Kurzfasern mit einer Länge von weniger als 50 Millimetern zerschnitten werden.

28. Verfahren zur Herstellung einer Bremsscheibe mit einem Keramikkörper nach einem der Ansprüche 15 bis 27, umfassend die folgenden Schritte:
- Herstellen von Prepregs (128; 146) aus hochwarmfesten Fasern umfassend mindestens eine Schicht (92, 93, 94) aus unidirektionalen oder gewebten Langfasern, die eine Länge von mindestens 50 Millimeter aufweisen, die jeweils mit einem organischen Precursor vorzugsweise unter Zusatz von Füllmitteln zu einer unter Hitzeeinwirkung formbaren Schicht verbunden sind;
- Herstellen einer Mischung aus organischem Precursor und Kurzfasern, die eine Länge von weniger als 50 Millimeter aufweisen, vorzugsweise unter Zusatz von Füllmitteln;
- Einbringen mindestens eines Prepregs (128; 146) mit mindestens einer Schicht aus der Mischung mit Kurzfasern in ein Preßwerkzeug (50) und Pressen unter Hitzeeinwirkung zur Herstellung eines Grünlings;
- Pyrolysieren des Grünlings zur Herstellung eines porösen Formkörpers;
- Schmelzinfiltrieren des porösen Formkörpers mit einer reaktiven Schmelze, vorzugsweise mit einer Siliziumschmelze.

29. Verfahren zur Herstellung einer Bremsscheibe mit einem Keramikkörper nach einem der Ansprüche 15 bis 27, umfassend die folgenden Schritte:
- Herstellen von Prepregs (128; 146) aus hochwarmfesten Fasern umfassend mindestens eine Schicht (92, 93, 94) aus unidirektionalen oder gewebten Langfasern, die jeweils mit einem organischen Precursor vorzugsweise unter Zusatz von Füllmitteln zu einer unter Hitzeeinwirkung formbaren Schicht verbunden sind;
- Herstellen einer Mischung aus organischem Precursor und Kurzfasern vorzugsweise unter Zusatz von Füllmitteln;
- Einbringen mindestens eines Prepregs (128; 146) mit einer Schicht aus der Mischung mit Kurzfasern in ein Preßwerkzeug (50) und Pressen unter Hitzeeinwirkung zur Herstellung einer ersten Hälfte (17, 18; 71, 72; 100) der Bremsscheibe (16; 60; 70; 90);
- Einbringen mindestens eines weiteren Prepregs (128; 146) in vorzugsweise dasselbe Preßwerkzeug (50) und Pressen unter Hitzeeinwirkung zur Herstellung einer zweiten Hälfte (17, 18; 71, 72; 100) der Bremsscheibe (16; 60; 70; 90);
- Zusammenfügen der beiden Hälften (17, 18; 71, 72; 100) und Pyrolisieren unter Luftabschluß zur Herstellung eines porösen Formkörpers;
- Schmelzinfiltrieren des porösen Formkörpers mit einer reaktiven Schmelze, vorzugsweise mit einer Siliziumschmelze.

## Claims

1. Fibre-reinforced ceramic body consisting of a core and a boundary layer (93, 94) that is connected to the core and has at least one outer surface (96, 97) that may preferably be subjected to tribological stress, wherein the core is composed of one or more layers (92), of which at least one layer is reinforced with long fibres that have a length of at least 50 millimetres, wherein the boundary layer (93, 94) is reinforced with short fibres that have a length of less than 50 millimetres, and wherein the fibres are reaction-bonded with a melt-infiltrated matrix.

2. Ceramic body according to claim 1, in which the core has a plurality of layers (UD layers) (92) reinforced with long fibres, whose long fibres are in each case arranged in a preferential direction, the preferential directions of at least two UD layers (92) being arranged angularly displaced relative to one another.

3. Ceramic body according to claim 1 or 2, in which the core has at least one layer (95) with woven long fibres or with short fibres.

4. Ceramic body according to claim 3, in which a layer with woven long fibres (95) is arranged between two adjacent UD layers (92).

5. Ceramic body according to one of the preceding claims, in which the short fibres are arranged in a largely randomly distributed manner.

6. Ceramic body according to one of the preceding claims, in which the long fibres and short fibres are formed as high temperature-resistant fibres with covalent bonding, based on silicon, carbon, boron and/or nitrogen, and are preferably formed as SiC fibres, C fibres or SiBCN fibres.

7. Ceramic body according to one of the preceding claims, **characterised in that** the fibres are reaction-bonded with a matrix of silicon carbide.

8. Brake disc with a ceramic body according to one of the preceding claims, with two halves (17, 18; 71, 72; 100) joined to one another, wherein each half (17, 18; 71, 72; 100) has an outside formed as a friction surface (24, 26; 81, 82; 102) and an inside, wherein ribs (20, 20', 20", 20"') are provided on the inside of at least one half (17, 18; 71, 72; 100) that rest against the other half (17, 18; 71, 72; 100), wherein substantially radially running ribs (20, 20', 20", 20"') are provided on the insides of both halves (17, 18; 71, 72; 100) that engage positively between corresponding ribs (20, 20', 20", 20"') of the respective other half (17, 18; 71, 72; 100).

9. Brake disc according to claim 8, in which ventilation channels (21) are formed between the ribs (20-20"') of one half (17, 18; 71, 72; 100) and the ribs (20-20"') of the other half (17, 18; 71, 72; 100).

10. Brake disc according to claim 8 or 9, in which both halves (17, 18; 71, 72; 100) are formed identically as regards shape and size.

11. Brake disc according to claim 10, in which each rib (20-20"') has a first supporting surface (27) running in a radial plane, which changes via an inclined surface (28) into a second supporting surface (29) running in a radial plane, which second supporting surface is at a greater distance from the friction surface (24, 26; 81, 82; 102) than the first supporting surface (27).

12. Brake disc according to claim 10 or 11, **characterised in that** on the inside of each half (17, 18; 71, 72; 100) substantially radially running grooves (30, 31) are formed, between which the ribs (20-20''') project in a raised manner, which in each case have first supporting surfaces (27), and wherein in each case four ribs (20-20"') are arranged successively in the circumferential direction so that the first supporting surfaces (27) of the first rib (20) and of the adjacent second rib (20') point towards one another, while the first supporting surfaces of the second rib (20') and of the following third rib (20") point away from one another, and the first supporting surfaces of the third rib (20") and of the following fourth rib (20"') again point towards one another.

13. Brake disc according to one of claims 8 to 12, with a central securement opening (22; 62) for securement to a wheel by means of a flange (13; 74), wherein the friction surfaces (24, 26; 81, 82) are formed flat for friction-locking connection to the flange (13; 74).

14. Brake disc according to claim 13, in which grooves (64) starting from the securement opening (62) are provided on at least one friction surface for the positive connection with corresponding webs of the flange.

15. Process for the production of a fibre-reinforced ceramic body, in which a core is produced from at least one layer (92) that is reinforced with long fibres that have a length of at least 50 millimetres, and the core is joined to a boundary layer (93, 94) that is reinforced with short fibres that have a shorter length than the long fibres, namely a length of less than 50 millimetres, and has at least one outer surface (96, 97) that may be preferably be subjected to tribological stress, comprising the following steps:
- production of a prepreg (128; 146) mouldable under the action of heat and formed from at least one layer (92) of long fibres under the addition of organic precursors and preferably under the addition of fillers;
- production of a mixture mouldable under the action of heat and formed from short fibres and organic precursors, preferably under the addition of fillers;
- introduction of the prepreg (128; 146) together with a layer (93, 94) consisting of the mixture into a mould and compression under the action of heat to produce a green product;
- pyrolysis of the green product to produce a porous moulded body;
- melt infiltration of the porous moulded body with a melt, preferably with a silicon melt, to produce a moulded body with reaction-bonded fibres.

16. Process according to claim 15, in which the core is produced from a plurality of long fibre reinforced layers (UD layers) (92), whose long fibres are in each case arranged in a preferred direction, wherein at least two UD layers (92) are used whose preferred directions are arranged angularly displaced relative to one another.

17. Process according to claim 15 or 16, in which at least one layer (95) with woven long fibres is incorporated into the core.

18. Process according to one of claims 15 to 17, in which high temperature-resistant fibres with covalent bonding, based on silicon, carbon, boron and/or nitrogen, preferably SiC fibres, C fibres or SiBCN fibres, are used as long fibres and short fibres.

19. Process according to claim 18, in which a plurality of short fibre-reinforced and/or long fibre-reinforced prepregs are assembled to form a laminate (91) before they are compressed in the mould under the action of heat to form a green product.

20. Process according to one of claims 15 to 19, in which the prepreg (128) is produced according to the SMC process involving the following steps:
- unwinding of a carrier film (116) from a storage roll;
- feeding from above of an organic precursor and fibres (120) onto the carrier film (116);
- application from above of an organic precursor and a further carrier film (118);
- compacting of the material enclosed between the two carrier films (116, 118) and winding onto a storage roll;
- ageing of the precursor in order to effect a partial crosslinking.

21. Process according to claim 20, in which the carrier films (116, 118) are removed after the ageing, before the prepreg (128) or a laminate (91) consisting of several prepregs is compressed in the mould together with the at least one boundary layer containing short fibres, to produce the green product.

22. Process according to claim 20 or 21, in which the fibres (120) are cut into short fibres during the feed to the carrier film (116).

23. Process according to claim 22, in which a further layer of fibres that are cut into short fibres, as well as further organic precursors, are applied to a layer with long fibres with the interpositioning of an organic precursor, before the second carrier film (118) is applied.

24. Process according to one of claims 15 to 18, in which the core produced according to the RTM process from a fibre framework of long fibres is placed in a mould, an organic precursor is then injected into the mould under pressure and shaped, at least one layer of a mixture of organic precursor and short fibres is applied to the thus formed body, and the said body is post-formed in a mould under the action of heat before the green product thereby produced is pyrolysed and then melt infiltrated.

25. Process according to one of claims 15 to 24, in which a pitch or a resin, preferably a phenol resin or a furan resin, is used as organic precursor.

26. Process according to claim 15 or 19, in which a prepreg reinforced with long fibres is produced by slip infiltration, wherein fibres are unwound and infiltrated by means of a dipping process with a slip consisting of an organic or organometallic precursor, preferably a polysilane, a polysiloxane or a polycarbosilane, as well as solvents and fillers, and are then wound onto a take-off core (144).

27. Process according to one of claims 15 to 26, in which the fibres (120; 134) are used in the form of fibre bundles (rovings), which are processed either as long fibres having a length of at least 50 millimetres or are cut into short fibres having a length of less than 50 millimetres.

28. Process for the production of a brake disc with a ceramic body according to one of claims 15 to 27, comprising the following steps:
- production of prepregs (128; 146) from high temperature-resistant fibres comprising at least one layer (92, 93, 94) of unidirectional or woven long fibres that have a length of at least 50 millimetres, which in each case are joined with an organic precursor, preferably with the addition of fillers, to form a layer that can be moulded under the action of heat;
- production of a mixture of organic precursor and short fibres that have a length of less than 50 millimetres, preferably with the addition of fillers;
- introduction of at least one prepreg (128; 146) together with at least one layer formed from the mixture with short fibres into a compression mould (50) and compression under the action of heat to produce a green product;
- pyrolysis of the green product to produce a porous moulded body;
- melt infiltration of the porous moulded body with a reactive melt, preferably with a silicon melt.

29. Process for the production of a brake disc with a ceramic body according to one of claims 15 to 27, comprising the following steps:
- production of prepregs (128; 146) from high temperature-resistant fibres comprising at least one layer (92, 93, 94) of unidirectional or woven long fibres, which in each case are joined with an organic precursor, preferably with the addition of fillers, to form a layer that can be moulded under the action of heat;
- production of a mixture of organic precursor and short fibres, preferably with the addition of fillers;
- introduction of at least one prepreg (128; 146) together with a layer formed from the mixture with short fibres into a compression mould (50) and compression under the action of heat to produce a first half (17, 18; 71, 72; 100) of the brake disc (16; 60; 70; 90);
- introduction of at least one further prepreg (128; 146) into preferably the same compression mould (50) and compression under the action of heat to produce a second half (17, 18; 71, 72; 100) of the brake disc (16; 60; 70; 90);
- joining of the two halves (17, 18; 71, 72; 100) and pyrolysis under the exclusion of air to produce a porous moulded body;
- melt infiltration of the porous moulded body with a reactive melt, preferably with a silicon melt.

## Revendications

1. Corps en céramique renforcé par des fibres, constitué d'un noyau et d'une couche superficielle (93, 94), qui est liée au noyau et présente au moins de préférence une surface externe (96, 97) sollicitable tribologiquement, le noyau étant composé d'une ou plusieurs couches (92), dont l'une au moins est renforcée par des fibres longues ayant une longueur de 50 mm au moins, la couche superficielle (93, 94) étant renforcée par des fibres courtes, dont la longueur est inférieure à 50 mm, et les fibres étant liées réactionnellement par une matrice infiltrée par une matière fondue.

2. Corps en céramique selon la revendication 1, dans lequel le noyau présente plusieurs couches renforcées par des fibres longues (couches UD, 92), lesquelles fibres sont disposées chaque fois dans une direction préférentielle, les directions préférentielles de deux couches UD (92) au moins présentant l'une par rapport à l'autre un décalage angulaire.

3. Corps en céramique selon la revendication 1 ou 2, dans lequel le noyau présente au moins une couche (95) comportant des fibres longues tissées ou des fibres courtes.

4. Corps en céramique selon la revendication 3, dans lequel, entre deux couches UD (92) voisines, est disposée une couche comportant des fibres longues tissées (95).

5. Corps en céramique selon l'une des revendications précédentes, dans lequel les fibres courtes sont disposées, dans une large mesure, selon une distribution statistique.

6. Corps en céramique selon l'une des revendications précédentes, dans lequel les fibres longues et les fibres courtes sont constituées de fibres hautement résistantes à la chaleur, comportant des liaisons covalentes, à base de silicium, de carbone, de bore et/ou d'azote, de préférence de fibres de SiC, de carbone ou de SiBCN.

7. Corps en céramique selon l'une des revendications précédentes, **caractérisé en ce que** les fibres sont liées réactionnellement avec une matrice de carbure de silicium.

8. Disque de frein doté d'un corps en céramique selon l'une des revendications précédentes et comportant deux moitiés liées entre elles (17, 18 ; 71, 72 ; 100), dont chacune présente une face externe formée comme surface de friction (24, 26 ; 81, 82 ; 102) et une face interne, l'une au moins des moitiés (17, 18 ; 71, 72 ; 100) comportant, sur sa face interne, des nervures (20 ; 20', 20", 20"'), qui sont situées contre l'autre moitié (17, 18 ; 71, 72 ; 100), et les faces internes des deux moitiés (17, 18 ; 71, 72 ; 100) comportant des nervures disposées de façon essentiellement radiale (20 ; 20', 20", 20"'), qui s'engrènent avec un engagement positif entre les nervures correspondantes (20 ; 20', 20", 20"')de l'autre moitié (17, 18 ; 71, 72 ; 100).

9. Disque de frein selon la revendication 8, dans lequel, entre les nervures (20 ; 20', 20", 20"') d'une moitié (17, 18 ; 71, 72 ; 100) et les nervures (20; 20', 20", 20"') de l'autre moitié (17, 18 ; 71, 72 ; 100), se trouvent des canaux de ventilation (21).

10. Disque de frein selon la revendication 8 ou 9, dans lequel les deux moitiés (17, 18 ; 71, 72 ; 100) sont identiques par la forme et la dimension.

11. Disque de frein selon la revendication 10, dans lequel chaque nervure (20 ; 20', 20", 20"') présente une première surface d'appui (27), disposée dans un plan radial, qui, par l'intermédiaire d'une surface inclinée (28), se transforme en une deuxième surface d'appui (29), disposée dans un plan radial, laquelle se situe à une plus grande distance de la surface de friction (24, 26 ; 81, 82 ; 102) que la première surface d'appui (27).

12. Disque de frein selon la revendication 10 ou 11, **caractérisé en ce que** la face interne de chaque moitié (17, 18 ; 71, 72 ; 100) comporte des rainures disposées essentiellement de façon radiale (30, 31), dans lesquelles les nervures (20 ; 20', 20", 20"') font saillie, lesquelles nervures présentent dans chaque cas des premières surfaces d'appui (27), chacune des quatre nervures (20 ; 20', 20", 20"') étant disposée l'une derrière l'autre dans la direction circonférentielle de telle manière que les premières surfaces d'appui (27) de la première nervure (20) et de la deuxième nervure suivante (20') se font face, tandis que les premières surfaces d'appui de la deuxième nervure (20") et de la troisième nervure suivante (20") s'écartent les unes des autres et que les premières surfaces d'appui de la troisième nervure (20") et de la quatrième nervure suivante (20"') se font face à nouveau.

13. Disque de frein selon l'une des revendications 8 à 12, comportant une ouverture de fixation centrale (22 ; 62), destinée à la fixation d'une roue au moyen d'une flasque (13 ; 74), les surfaces de friction (24, 26 ; 81, 82), destinées à la liaison entraînée par friction avec la flasque (13 ; 74), étant planes.

14. Disque de frein selon la revendication 13, dans lequel au moins une des surfaces de friction est pourvue de rainures partant de l'ouverture de fixation (62) et destinées à la liaison avec engagement positif à l'âme correspondante de la flasque.

15. Procédé de fabrication d'un corps en céramique renforcé par des fibres, dans lequel on fabrique un noyau composé d'au moins une couche (92), qui est renforcé par des fibres longues présentant une longueur d'au moins 50 mm, et on relie le noyau à une couche superficielle (93, 94), renforcée par des fibres courtes, dont la longueur est inférieure à 50 mm et à la longueur des fibres longues, et comportant au moins une surface externe (96, 97), qui de préférence est sollicitable tribologiquement, lequel procédé comprend les étapes suivantes :
- fabrication d'un préimprégné formable sous l'action de la chaleur (128 ; 146), à partir d'au moins une couche (92) de fibres longues, en utilisant des précurseurs organiques et de préférence en ajoutant des charges;
- préparation d'un mélange de fibres courtes et de précurseurs organiques formable sous l'action de la chaleur, de préférence en ajoutant des charges ;
- introduction du préimprégné (128 ; 146), comportant une couche (93, 94) du mélange, dans un moule et compactage sous l'action de la chaleur, de manière à fabriquer une ébauche ;
- pyrolyse de l'ébauche pour fabriquer un coeur de moule poreux;
- infiltration par une matière fondue du corps poreux en utilisant une matière fondue, de préférence du silicium fondu, pour fabriquer un coeur de moule comportant des fibres liées réactionnellement.

16. Procédé selon la revendication 15, dans lequel on fabrique le noyau à partir de plusieurs couches renforcées par des fibres longues (couches UD, 92), lesquelles fibres sont disposées chaque fois dans une direction préférentielle, et dans lequel on utilise au moins deux couches UD (92), dont les directions préférentielles présentent un décalage angulaire entre elles.

17. Procédé selon la revendication 15 ou 16, dans lequel on introduit dans le noyau au moins une couche (95) comportant des fibres longues tissées.

18. Procédé selon l'une des revendications 15 à 17, dans lequel on utilise des fibres hautement résistantes à la chaleur, comportant des liaisons covalentes, à base de silicium, de carbone, de bore et/ou d'azote, de préférence des fibres de SiC, de carbone ou de SiBCN, comme fibres longues et comme fibres courtes.

19. Procédé selon la revendication 18, dans lequel on assemble plusieurs préimprégnés renforcés par des fibres courtes et/ou longues en un stratifié (91), avant de les compacter pour en faire une ébauche

20. Procédé selon les revendications 15 à 19, dans lequel on fabrique le préimprégné (129) selon le procédé SMC, comportant les étapes suivantes :
- déroulement d'un film support (116) à partir d'une réserve;
- application d'un précurseur organique et de fibres (120) sur le film support (116) par le haut ;
- application d'un précurseur organique et d'un autre film support (118) par le haut ;
- compactage du matériau enfermé entre les deux films supports (116, 118) et enroulement sur une réserve;
- vieillissement du précurseur pour obtenir une réticulation partielle.

21. Procédé selon la revendication 20, dans lequel on détache les films supports (116, 118) après le vieillissement, avant de compacter le préimprégné (128) ou le stratifié (91) constitué de plusieurs préimprégnés, dans le moule, avec la au moins une couche superficielle contenant des fibres courtes, pour fabriquer une ébauche.

22. Procédé selon la revendication 20 ou 21, dans lequel on découpe les fibres (120) en fibres courtes pendant l'application sur le film support (116).

23. Procédé selon la revendication 22, dans lequel on applique, sur une couche comportant des fibres longues, en intercalant un précurseur organique, une autre couche de fibres, qui sont découpées pour obtenir des fibres courtes, ainsi qu'une quantité supplémentaire de précurseur organique, avant d'appliquer le deuxième film support (118).

24. Procédé selon l'une des revendications 15 à 18, dans lequel on met dans un moule le noyau réalisé selon le procédé RTM à partir d'un cadre constitué de fibres longues, on injecte ensuite sous pression un précurseur organique dans le moule, on applique sur le corps ainsi formé au moins une couche d'un mélange constitué de précurseur organique et de fibres courtes et on procède au postformage du corps dans un moule en faisant agir la chaleur, avant de pyroliser l'ébauche ainsi produite et de l'infiltrer ensuite avec une matière fondue.

25. Procédé selon l'une des revendications 15 à 24, dans lequel on utilise, comme précurseur organique, un brai ou une résine, de préférence une résine phénolique ou furanique.

26. Procédé selon la revendication 15 ou 19, dans lequel on fabrique un préimprégné renforcé par des fibres longues par infiltration de barbotine, dans lequel on déroule les fibres et on fait infiltrer, par un procédé de trempage, une barbotine composée d'un précurseur organique ou organométallique, de préférence un polysilane, un polysiloxane ou un polycarbosilane, ainsi que des solvants et des charges, puis on enroule le préimprégné sur un noyau de dépôt (144).

27. Procédé selon l'une des revendications 15 à 26, dans lequel on utilise les fibres (120 ; 134) sous la forme de faisceaux de fibres (rovings), qui sont traités soit sous forme de fibres longues de 50 mm au moins de long, soit découpées en fibres courtes de moins de 50 mm de long.

28. Procédé de fabrication d'un disque de frein comportant un corps en céramique selon l'une des revendications 15 à 27 ; comprenant les étapes suivantes :
- fabrication de préimprégnés (128 ; 146) constitués de fibres hautement résistantes à la chaleur entourant au moins une couche (92, 93, 94) de fibres longues unidirectionnelles ou tissées, présentant une longueur de 50 mm au moins, qui sont liées chaque fois par un précurseur organique, de préférence en ajoutant des charges, à une couche formable sous l'action de la chaleur ;
- préparation d'un mélange composé de précurseur organique et de fibres courtes, dont la longueur est inférieure à 50 mm, de préférence en ajoutant des charges ;
- introduction d'au moins un préimprégné (128 ; 146), comportant au moins une couche du mélange contenant les fibres courtes dans une presse (50) et compactage sous l'action de la chaleur, de manière à obtenir une ébauche ;
- pyrolyse de l'ébauche pour fabriquer un coeur de moule poreux ;
- infiltration par une matière fondue du coeur de moule poreux en utilisant une matière fondue réactive, de préférence du silicium fondu.

29. Procédé de fabrication d'un disque de frein comportant un corps en céramique selon l'une des revendications 15 à 27, comprenant les étapes suivantes :
- fabrication de préimprégnés (128 ; 146) constitués de fibres hautement résistantes à la chaleur entourant au moins une couche (92, 93, 94) de fibres longues unidirectionnelles ou tissées, qui sont liées dans chaque cas, à l'aide d'un précurseur organique et de préférence en ajoutant des charges, à une couche formable sous l'action de la chaleur ;
- préparation d'un mélange composé du précurseur organique et de fibres courtes, de préférence en ajoutant des charges ;
- introduction d'au moins un préimprégné (128 ; 146), comportant une couche du mélange contenant des fibres courtes dans une presse (50) et compactage sous l'action de la chaleur, de manière à fabriquer une première moitié (17, 18 ; 71, 72 ; 100) du disque de frein (16 ; 60 ; 70 ; 90) ;
- introduction d'au moins un autre préimprégné (128 ; 146) dans, de préférence, la même presse (50) et compactage sous l'action de la chaleur, de manière à obtenir une deuxième moitié (17, 18 ; 71, 72 ; 100) du disque de frein (16 ; 60 ; 70 ; 90) ;
- assemblage des deux moitiés (17, 18 ; 71, 72 ; 100) et pyrolyse à l'abri de l'air, de manière à fabriquer un coeur de moule poreux;
- infiltration par une matière fondue du coeur de moule poreux en utilisant une matière fondue réactive, de préférence du silicium fondu.
